# DEMANDE DE BREVET EUROPEEN

(11) **EP 1 741 844 A1**
(43) Date de publication de la demande: **10.01.2007**
(21) Numéro de dépôt: 05291447.0
(22) Date de dépôt: 05.07.2005
(51) Int. Cl.: E03D 5/00, E03B 1/04

(54) **Dispositif de recyclage des eaux usées pour leur réutilisation par un élément de consommation**

(71) Demandeur: Aldanese, Véronique, 78480 Verneuil Sur Seine (FR)
(72) Inventeur: Aldanese, Véronique, 78480 Verneuil Sur Seine (FR); Askar, Ali Hamad, 4485-128 Vila Do Conde (PT)
(74) Mandataire: Célanie, Christian

(57) **Abrégé**

L'invention concerne un dispositif de recyclage des eaux usées pour leur réutilisation par un élément de consommation (1), comportant au moins un filtre (16), une unité de stérilisation (3) et un réservoir (2) d'eau stérilisée relié à l'élément (1).

Ce dispositif comporte une valve pilotée (4) à laquelle ces différents éléments sont reliés, ladite valve étant reliée elle-même aux sources d'eaux usées, et une unité de commande (14) de cette valve permettant de la piloter pour diriger les eaux usées vers l'unité de stérilisation (3) ou vers un circuit d'évacuation (11). Le réservoir (2) comporte un capteur de remplissage (23).

## Description

Le secteur technique de la présente invention est celui des dispositifs d'alimentation hydraulique à partir des eaux usées et plus particulièrement des dispositifs comportant des moyens de recyclage de ces eaux usées.

Le problème de l'eau est de plus en plus présent dans le monde. Aussi bien dans les pays arides que dans les pays industrialisés, l'évolution des conditions climatiques et des pratiques industrielles et agricoles entraîne une diminution du niveau des nappes phréatiques et des ressources disponibles en eau potable. Ainsi, la lutte contre le gaspillage de l'eau est devenue une priorité économique et politique dans de nombreux pays. Cette lutte contre le gaspillage est à considérer aussi bien au niveau agricole, qu'industriel et domestique. Ainsi, on sait qu'au niveau d'un individu une chasse d'eau consomme en moyenne entre 5 et 7 litres d'eau à chaque utilisation, ce qui peut représenter jusqu'à 50% de la consommation en eau potable d'une famille moyenne. Or, cette eau n'est pas destinée à la consommation et il est donc aberrant d'utiliser de telles quantités d'eau potables pour un tel usage. Il est donc judicieux d'alimenter les chasses d'eau avec une eau impropre à la consommation mais saine.

On a déjà proposé dans la demande de brevet DE10304316 une installation de réutilisation des eaux usées consistant à pomper l'eau issue d'une douche, d'une baignoire, d'un bidet ou d'un lavabo, de filtrer l'eau et de la stocker dans un réservoir jusqu'à utilisation pour le remplissage d'une réserve de chasse d'eau. Ce brevet ne prévoit aucune stérilisation des eaux usées.

Dans la demande de brevet WO2004046474, on décrit un dispositif de filtrage et de recyclage des eaux usées ou pluviales comportant un filtre, des moyens permettant de générer une circulation des eaux à recycler au travers du filtre, ainsi qu'un moyen de désinfection. Il s'agit d'un dispositif complexe.

Un inconvénient majeur de ces dispositifs connus réside dans le fait que le recyclage de l'eau est permanent, ce qui est inadapté à une utilisation domestique. L'utilisateur ne dispose d'aucune possibilité de choisir le recyclage en fonction des caractéristiques de l'eau à recycler.

Le but de la présente invention est de fournir un dispositif de recyclage des eaux usées et leur réutilisation permettant à un utilisateur de choisir ou non si les eaux usées doivent être recyclées pour alimenter une chasse d'eau et de commander le cas échéant l'alimentation directe de cette chasse en eau.

L'invention a donc pour objet un dispositif de recyclage des eaux usées pour leur réutilisation par un élément de consommation, comportant au moins un filtre, une unité de stérilisation et un réservoir d'eau stérilisée relié à l'élément, caractérisé en ce qu'il comporte une valve pilotée à laquelle ces différents éléments sont reliés, ladite valve étant reliée elle-même aux sources d'eaux usées, et une unité de commande de cette valve permettant de la piloter pour diriger les eaux usées vers l'unité de stérilisation ou vers un circuit d'évacuation.

Selon une caractéristique de l'invention, le dispositif de recyclage comporte une pompe permettant de commander la circulation des eaux à recycler de la valve vers le réservoir.

Selon une autre caractéristique de l'invention, le réservoir comporte un capteur de remplissage.

Selon encore une autre caractéristique de l'invention, l'unité de commande est reliée au capteur de remplissage afin d'afficher le niveau de remplissage du réservoir et d'interdire le recyclage des eaux usées lorsque le réservoir est plein.

Selon une autre caractéristique de l'invention, la valve pilotée comporte au moins un capteur d'analyse des eaux usées.

Selon une autre caractéristique de l'invention, l'unité de commande est reliée au capteur d'analyse afin d'autoriser ou non le recyclage des eaux usées en fonction de leurs caractéristiques.

Selon une autre caractéristique de l'invention, l'unité de commande est interposée entre l'alimentation en eau potable et l'élément de consommation afin d'assurer leur connexion directe.

Enfin, l'invention concerne également un procédé d'alimentation en eau potable et de recyclage des eaux usées domestiques d'un élément de consommation mettant en oeuvre un dispositif selon l'une des revendications précédentes, caractérisé en ce qu'on commande la vanne pilotée et la pompe en fonction de la sélection faite par un utilisateur, on coupe à l'aide de l'unité de commande l'alimentation en eau potable de l'élément de consommation jusqu'à ce que l'utilisateur sélectionne le recyclage ou non des eaux usées, et en ce qu'on commande l'alimentation de l'élément de consommation soit en eau potable soit en eau recyclée.

Un tout premier avantage du dispositif selon l'invention réside dans le fait que le recyclage est commandé soit par un utilisateur, soit par une logique de commande, en fonction des caractéristiques des eaux usées.

Un autre avantage réside dans le fait que le dispositif selon l'invention peut être intégré dans un local sans modification majeure et de manière simple.

Un autre avantage réside dans le fait que l'utilisateur peut visualiser des données lui permettant de décider s'il est judicieux de recycler les eaux usées.

Un autre avantage réside dans le fait qu'un choix de l'utilisateur peut être imposé afin qu'il sélectionne préalablement le recyclage ou non des eaux usées.

Un autre avantage réside encore dans l'interconnexion du dispositif avec l'alimentation en eau potable afin de permettre l'utilisation de celle-ci.

D'autres caractéristiques, détails et avantages de l'invention ressortiront plus clairement de la description donnée ci-après à titre indicatif en relation avec des dessins dans lesquels :
- la figure 1 représente un mode de réalisation d'un dispositif de recyclage des eaux usées pour leur réutilisation selon l'invention, et
- la figure 2 illustre un autre mode de réalisation d'un dispositif de recyclage des eaux usées selon l'invention.

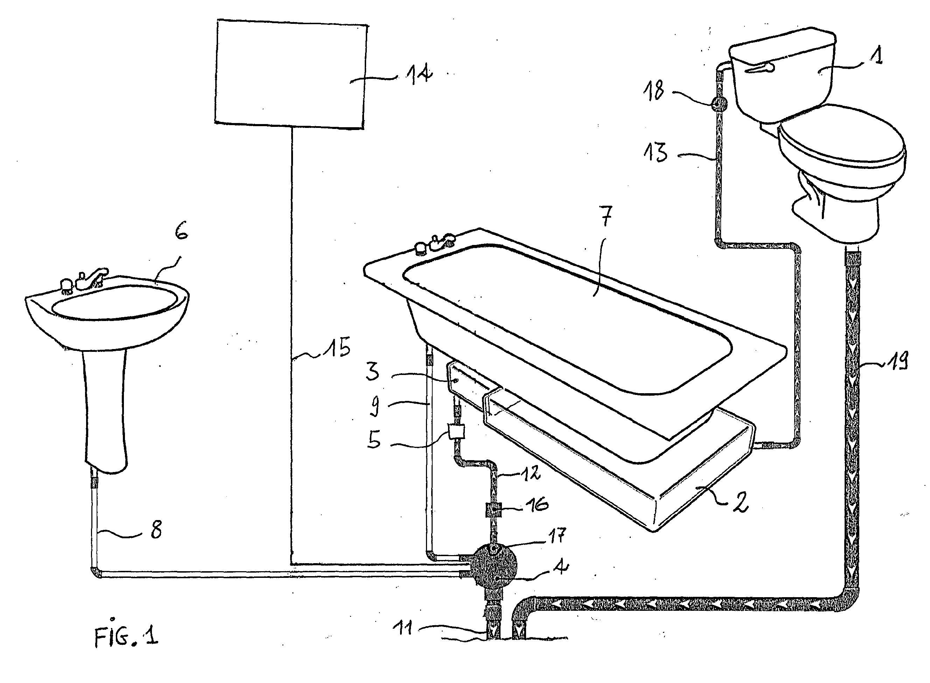

La figure 1 illustre un premier mode de réalisation d'un dispositif de recyclage des eaux usées selon l'invention. Il s'agit des eaux usées domestiques sans que cela constitue une limitation de la portée de l'invention. On entend par "eaux usées domestiques" les eaux usées issues d'éléments domestiques tels des baignoires, lavabo, éviers, urinoirs,... Ce terme ne se restreint pas aux habitations particulières et s'étend également à l'hôtellerie, aux collectivités, aux commerces ou à toute autre structure quelle que soit sa nature.

Dans ce mode de réalisation, le dispositif de recyclage des eaux usées est constitué d'un réservoir 2, d'une unité de stérilisation 3, d'une pompe 5, d'une valve pilotée 4 et d'une unité de commande 14. On a représenté de manière non exhaustive des éléments susceptibles d'émettre des eaux usées recyclables. Ces éléments sont par exemple un lavabo 6 et une baignoire 7. Des canalisations 8 et 9 d'eaux usées permettent d'évacuer les eaux usées du lavabo 6 et de la baignoire 7 vers la valve pilotée 4. Une canalisation de recyclage 12 relie la valve pilotée 4 à l'unité de stérilisation 3. Un filtre 16 est disposé entre la valve 4 et l'unité de stérilisation 3. Ce filtre permet d'éliminer les particules solides présentes dans ces eaux.

Une conduite d'évacuation 11 relie également la valve pilotée 4 au circuit général d'évacuation des eaux usées, par exemple le tout-à-l'égout ou une fosse sceptique (non représentés). Une conduite d'eau recyclée 13 relie le réservoir 2 à un élément consommateur d'eau recyclée, ici une réserve 1 de chasse d'eau.

L'unité de commande 14 est reliée à la valve pilotée 4 au moyen d'un circuit de commande 15. Le circuit de commande 15 est du type électrique, pneumatique, mécanique ou hydraulique, en fonction des modes de fonctionnement de l'unité de commande et de la valve mises en oeuvre.

L'unité de stérilisation 3 permet de stériliser l'eau, ou tout au moins de la désinfecter avant de remplir le réservoir 2. On connaît déjà de nombreux types d'unités de stérilisation qui conviennent à cette utilisation, par exemple ceux fonctionnant au moyen d'agents chimiques, biologiques ou par action électrique.

La valve 4 comporte un clapet anti-retour 17 afin d'interdire le passage de l'eau stérilisée et la conduite 13 d'eau recyclée comporte également un clapet anti-retour 18 permettant d'interdire le passage de l'eau venant de la réserve 1. La pompe 5 est par exemple supportée par la canalisation de recyclage 12 ou disposée à l'intérieur de l'unité de stérilisation.

Le fonctionnement du dispositif est le suivant :

L'unité de commande 14 est actionnée par l'utilisateur et incrémente la position de la valve pilotée 4 selon que l'utilisateur souhaite recycler l'eau usée ou pas. Dans une première position, la valve 4 dirige l'eau usée des canalisations 8 et 9 directement vers la conduite d'évacuation 11. Il n'y a alors aucun recyclage des eaux usées en raison de leur inaptitude. C'est le cas par exemple lorsque les eaux usées renferme des impuretés qui ne peuvent être traitées par l'unité de stérilisation ou dont le traitement est trop complexe.

Dans une seconde position, la valve 4 dirige l'eau usée vers la canalisation de recyclage 12. Les eaux usées issues du lavabo 6 ou de la baignoire 7 sont alors filtrées par le filtre 16, puis acheminées vers l'unité de stérilisation 3 pour y être traitées puis enfin stockées dans le réservoir 2. Selon la disposition des différents éléments, l'acheminement des eaux usées jusqu'au réservoir 2 se fait soit par gravité, soit au moyen de la pompe 5. L'eau ainsi stérilisée peut être utilisée pour remplir la réserve 1 de chasse d'eau. Là encore, en fonction de la disposition des différents éléments, l'acheminement de l'eau recyclée jusqu'à la réserve 1 se fait soit par gravité, soit au moyen de la pompe 5, soit au moyen d'une pompe auxiliaire (non représentée).

Dans ce mode spécifique de réalisation, l'unité de stérilisation 2 et le réservoir 3 sont disposés dans un espace libre situé sous la baignoire. On pourra cependant envisager d'autres dispositions en fonction de la configuration des différents éléments et du local recevant le dispositif. On pourra par exemple disposer le réservoir 2 à une hauteur supérieure aux éléments consommateur d'eau recyclée ou, au contraire, à une hauteur inférieure aux éléments susceptibles d'émettre des eaux usées recyclables. Enfin, on pourra intégrer certains éléments tel le filtre 16 à la valve pilotée 4.

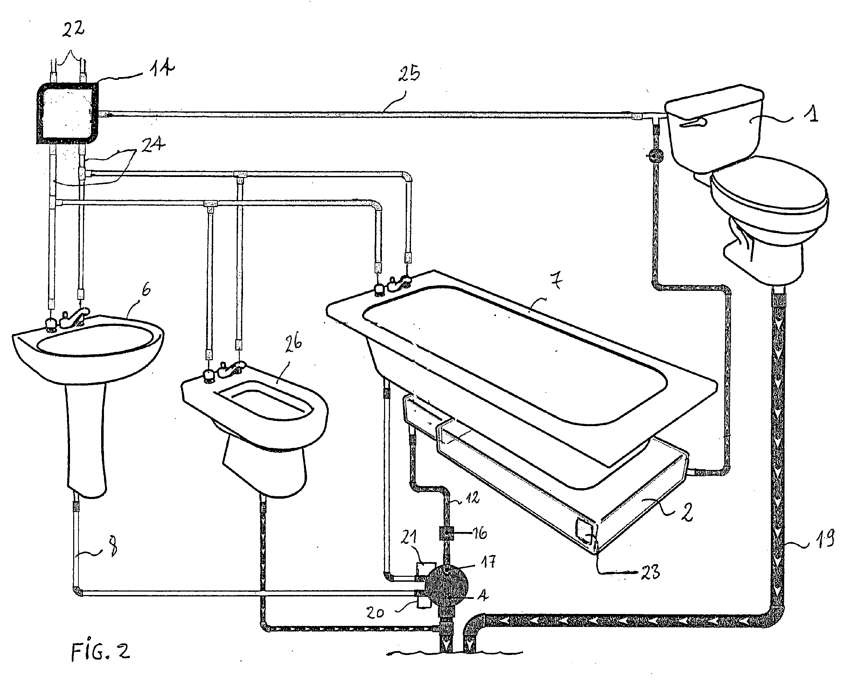

La figure 2 illustre un second mode de réalisation de l'invention. On voit que le dispositif selon l'invention peut être intégré dans un local sans modification majeure et de manière simple. Dans ce second mode de réalisation, le principe général de fonctionnement est le même que celui décrit précédemment à l'exception de l'unité de commande 14 qui permet également de gérer l'approvisionnement en eau potable de la réserve 1 en étant interconnectée avec l'installation générale du local d'alimentation en eau potable. Sur la figure, on notera la représentation de canalisation double correspondant au circuit eau froide et eau chaude. L'unité de commande 14 est reliée aux conduites générales 22 d'eau potable du local afin d'autoriser ou non l'alimentation de la réserve 1 par cette eau potable par l'intermédiaire de la conduite 25 et des conduites générales 24 afin de distribuer l'eau potable aux différents éléments 6, 7 et 26.

Un capteur de remplissage 23 est intégré dans le réservoir 2 et l'unité de commande 14 est reliée à celui-ci. Ce capteur est de type connu, par exemple un capteur à flotteur ou un capteur électronique. Le rôle de ce capteur est de commander la fermeture du circuit de stérilisation lorsque le réservoir est rempli et d'indiquer à l'utilisateur le niveau de remplissage du réservoir.

Dans ce mode de réalisation, l'unité de commande 14 est du type électronique à affichage digital. Ainsi, le niveau de remplissage du réservoir 2 peut être visualisé par l'utilisateur. L'unité de commande 14 peut comprendre des moyens pour interdire le recyclage des eaux usées lorsque le réservoir 2 est plein.

Dans une variante de réalisation, la valve pilotée 4 comporte un ou plusieurs capteurs d'analyse 20, 21 des eaux usées. L'unité de commande 14 est reliée aux capteurs d'analyse 20, 21 afin d'autoriser ou non le recyclage des eaux usées en fonction des caractéristiques des eaux usées. Ainsi, par exemple dans le cas d'une unité de stérilisation mettant en oeuvre des agents chimiques, on veillera à éviter des réactions chimiques susceptibles de détériorer l'unité de stérilisation. Dans le cas de détection de certains corps chimiques non recyclables (par exemple des hydrocarbures), l'unité de commande pourra alors interdire le recyclage des eaux usées. L'utilisateur pourra donc visualiser des données lui permettant de décider s'il est judicieux de recycler les eaux usées.

De tels modes de réalisation sont donnés à titre illustratif et non exhaustif. On pourra notamment mettre en oeuvre d'autres éléments visant à faciliter l'utilisation du dispositif, par exemple un synthétiseur vocal, ou des témoins lumineux de fonctionnement. De plus, l'installation et l'utilisation du dispositif ne sont pas limitées à une salle de bain. On pourra par exemple réaliser l'invention en y ajoutant des conduites d'eau usée provenant d'une machine à laver, d'un évier ou d'un sèche-linge à condensation. On pourra également alimenter le dispositif avec des eaux pluviales. Dans le cadre d'une structure collective ou hôtelière, on pourra également alimenter plusieurs réserves de chasses d'eau. Enfin, on peut prévoir un dispositif selon l'invention comprenant plusieurs réservoirs 2.

Bien entendu, divers dispositifs électroniques peuvent être associés au dispositif selon l'invention. Il est possible d'adjoindre un compteur permettant d'afficher le volume d'eau économisée. Il est encore possible d'adjoindre un bac de stockage des eaux usées difficiles à recycler pour les diriger vers une station collective de traitement.

## Revendications

1. Dispositif de recyclage des eaux usées pour leur réutilisation par un élément de consommation (1), comportant au moins un filtre (16), une unité de stérilisation (3) et un réservoir (2) d'eau stérilisée relié à l'élément de consommation (1), **caractérisé en ce qu'**il comporte une valve pilotée (4) à laquelle ces différents éléments sont reliés, ladite valve étant reliée elle-même aux sources d'eaux usées, et une unité de commande (14) de cette valve permettant de la piloter pour diriger les eaux usées vers l'unité de stérilisation (3) ou vers un circuit d'évacuation (11).

2. Dispositif de recyclage selon la revendication 1, **caractérisé en ce qu'**il comporte une pompe (5) permettant de commander la circulation des eaux à recycler de la valve (4) vers le réservoir (2).

3. Dispositif de recyclage selon la revendication 2, **caractérisé en ce que** le réservoir (2) comporte un capteur de remplissage (23).

4. Dispositif de recyclage selon la revendication 3, **caractérisé en ce que** l'unité de commande (14) est reliée au capteur de remplissage (23) afin d'afficher le niveau de remplissage du réservoir (2) et d'interdire le recyclage des eaux usées lorsque le réservoir (2) est plein.

5. Dispositif de recyclage selon l'une des revendications 2 à 4, **caractérisé en ce que** la valve pilotée (4) comporte au moins un capteur d'analyse (20, 21) des eaux usées.

6. Dispositif de recyclage selon la revendication 5, **caractérisé en ce que** l'unité de commande (14) est reliée au capteur d'analyse (20, 21) afin d'autoriser ou non le recyclage des eaux usées en fonction de leurs caractéristiques.

7. Dispositif de recyclage selon l'une des revendications 2 à 6, **caractérisé en ce que** l'unité de commande (14) est interposée entre l'alimentation (22) en eau potable et l'élément de consommation (1) afin d'assurer leur connexion directe.

8. Procédé d'alimentation en eau potable et de recyclage des eaux usées domestiques d'un élément de consommation (1) mettant en oeuvre un dispositif selon l'une des revendications précédentes, **caractérisé en ce qu'**on commande la vanne pilotée (4) et la pompe (5) en fonction de la sélection faite par un utilisateur, on coupe à l'aide de l'unité de commande (14) l'alimentation en eau potable de l'élément de consommation (1) jusqu'à ce que l'utilisateur sélectionne le recyclage ou non des eaux usées, et **en ce qu'**on commande l'alimentation de l'élément de consommation (1) soit en eau potable soit en eau recyclée.
